(19)

**Europäisches Patentamt**
**European Patent Office**
**Office européen des brevets**

(11)　**EP 4 686 035 A1**

(12)　**EUROPEAN PATENT APPLICATION**

(43) Date of publication:
**28.01.2026 Bulletin 2026/05**

(21) Application number: **24189971.5**

(22) Date of filing: **22.07.2024**

(51) International Patent Classification (IPC):
***H02J 3/38*** (2026.01)　　　***H02J 3/46*** (2026.01)

(52) Cooperative Patent Classification (CPC):
**H02J 3/381; H02J 1/14; H02J 3/46;** H02J 2300/28;
H02J 2300/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Hitachi Energy Ltd**
**8050 Zürich (CH)**

(72) Inventors:
• **BOLZONI, Alberto**
**5408 Ennetbaden (CH)**

• **ZHANG, Weichi**
**Beijing 100015 (CN)**
• **PAN, Jiuping**
**Raleigh 27606 (US)**
• **JOHANSSON, Nicklas**
**722 46 Västerås (SE)**
• **SVENSSON, Jan**
**723 46 Västerås (SE)**

(74) Representative: **Zacco Sweden AB**
**P.O. Box 5581**
**Löjtnantsgatan 21**
**114 85 Stockholm (SE)**

(54)　**POWER NETWORK ARRANGEMENT AND CONTROL METHOD THEREOF**

(57)　A power network arrangement includes a first power network and control system. The first power network includes a first sub-system and a second sub-system electrically coupled with the first sub-system through a power line. The first sub-system includes energy resources which comprise at least one renewable generation unit. The first sub-system and/or the second sub-system comprise one or more devices configured for providing a grid service, wherein the one or more devices comprise an electrolyzer unit. The control system comprises one or more local controllers for the energy resources and the one or more devices, and a network controller in communication with the one or more local controllers. The network controller is configured to coordinate with at least one local controller of the one or more local controllers to regulate at least one energy resource and/or at least one device of the one or more devices in response to a change in a network state of a second power network coupled with the first power network.

**Figure 2B**

EP 4 686 035 A1

## Description

### TECHNICAL FILED

The present disclosure relates to a power network arrangement and a control method for controlling the power network arrangement.

### BACKGROUND

A wind farm, also called a wind power station or wind power plant, is a group of wind turbines in the same location used to produce electricity. Wind farms vary in size from a small number of turbines to several hundred turbines covering an extensive area. Wind farms can be either onshore or offshore. Because they require no fuel, wind farms have less impact on the environment than many other forms of power generation and are often referred to as good sources of green energy.

Wind turbine generators are becoming key elements of power networks both at the transmission and distribution level, due to their capability to support the main power grid through a flexible arrangement of active and reactive-based services. In recent years, various control concepts have been developed for wind turbine generators (WTGs) to enable the provision of inertial-based frequency support during a network event at their AC terminals. This evolution has been mainly driven by the emerging regulation concerning mandatory provision of grid forming services for generation units connected to the transmission system.

Although the integration of fast regulation services (e.g., ratio of the required energy over the nominal contracted power below 1s) is relatively simple to achieve, the inclusion of slow frequency-support services (e.g., traditional or fast primary frequency regulation in the time scale from 1sec to 30 sec, secondary frequency regulation in the time scale of 30 sec to few minutes) represents a major challenge due to: increasing hardware costs (e.g. for the integration of an internal energy storage); limited capability of power converters; and impossibility to increase the power injection for a prolonged time once an wind turbine generator is operated in MPPT (Maximum Power Point Tracking), unless a dedicated storage

### SUMMARY

According to an embodiment of the present disclosure, a power network arrangement is provided. The power network arrangement includes a first power network comprising a first sub-system and a second sub-system electrically coupled with the first sub-system through a power line, the first sub-system comprising energy resources which comprise at least one renewable generation unit, the first sub-system and/or the second sub-system comprising one or more devices configured for providing a grid service, wherein the one or more devices comprise an electrolyzer unit; and a control system comprising one or more local controllers for the energy resources and the one or more devices, and a network controller communicatively coupled with the one or more local controllers. The network controller is configured to coordinate with at least one local controller of the one or more local controllers to regulate at least one energy resource and/or at least one device of the one or more devices in response to a change in a network state of a second power network coupled with the first power network.

In an example, the at least one renewable generation unit in the first network comprises a wind farm.

In an example, the at least one renewable generation unit comprises a solar power unit and/or a fuel cell unit.

In an example, the electrolyzer unit comprises an electrolyzer that is configured with a power supply to supply power to the electrolyzer, and the network controller is configured to control one of the one or more local controllers to control the power supplied to the electrolyzer such that amount of electricity consumed by the electrolyzer is controlled for providing the grid service.

In an example, the one or more devices further comprise one or more of: a static synchronous compensator (STATCOM), and a converter station coupled with the power line.

In an example, the power line comprises one or more DC transmission lines, and each DC transmission line is coupled with converter stations.

In an example, the power line comprises: one or more AC transmission lines; or one or more AC transmission lines and one or more DC transmission lines.

In an example, the power line comprises a plurality of transmission lines coupled at the same point of common coupling (PCC) for connection with the second power network.

In an example, the power line comprises a plurality of transmission lines coupled at different PCCs for connection with the second power network.

In an example, the first sub-system comprises a wind farm and at least one electrolyzer unit, and the wind farm and the at least one electrolyzer unit are coupled to the second sub-system through a common AC transmission line.

In an example, the first sub-system comprises a wind farm and at least one electrolyzer unit, and the wind farm and the at least one electrolyzer unit are coupled to the second sub-system through different AC transmission lines.

In an example, the first sub-system comprises a wind farm and the second sub-system comprises at least one electrolyzer unit, the wind farm is coupled to the second sub-system through an AC transmission line, and the second sub-system is coupled with the second power network at a point of common coupling (PCC).

In an example, the first sub-system comprises a wind farm and at least one electrolyzer unit, and the wind farm and the at least one electrolyzer unit are coupled to the second sub-system through a common HVDC transmission line, which is coupled with converter stations.

In an example, the first sub-system comprises a wind farm and the second sub-system comprises at least one electrolyzer unit, the wind farm is coupled to the second sub-system through an HVDC transmission line, which is coupled with converter stations, and the second sub-system is coupled with the second power network at a point of common coupling (PCC).

In an example, the first sub-system comprises a wind farm and at least one electrolyzer unit, and the wind farm and the at least one electrolyzer unit are coupled to the second sub-system through at least one AC transmission line and at least one DC transmission line.

In an example, the network controller is included in the first sub-system or the second sub-system.

In an example, the change in the network state of the second power network comprises the change in one or more of the following parameters: a voltage measured at the coupling point of the first and second networks; and a power frequency measured at the coupling point of the first and second networks.

In an example, the network controller is configured to coordinate with the at least one local controller to regulate a response of the first network with respect to a reference response, which corresponds to a regulation service when the change in the state occurs in the second power network.

According to another embodiment of the present disclosure, a method for controlling the power network arrangement described above is provided. The method includes the steps of: receiving information on a change in the network state of the second power network, wherein the information on the change comprises a network frequency and/or voltage measured at the coupling point of the first and second power networks; determining a reference response of the first power network based on the change in the network state of the second power network; and determining a control parameter of the at least one local controller based on the determined reference response, for regulating a response of the first power network with respect to the reference response.

In an example, the reference response comprises one or more of: a droop response of the first power network to the state change in the second power network; an inertial response of the first power network to the state change in the second power network; and a weighted combination of the droop response and the inertial response.

In an example, the control parameter comprises a set point and an adjustable coefficient; the set point comprises a target value of the regulation; and the adjustable coefficient comprises a first coefficient for adjusting the response speed of the first power network and a second coefficient for adjusting the stability of the first power network.

According to yet another embodiment of the present disclosure, a second power network coupled with the power network arrangement described above is provided. The second power network is configured to adapt according to the regulation performed in the first power network, when a state change occurs in the second power network.

## BRIEF DESCRIPTION OF THE DRAWINGS

The disclosed aspects will hereinafter be described in connection with the appended drawings, which are provided to illustrate but not to limit the scope of the present disclosure.

Figures 1A-1C illustrate power network arrangements according to examples of the present disclosure.

Figures 2A-2D illustrate exemplary configurations of AC connection examples.

Figures 3A-3C illustrate exemplary configurations of DC connection examples.

Figure 4 illustrates an exemplary configuration of an AC/DC hybrid connection example.

Figure 5 is a flowchart of a control method for controlling the power network arrangement according to an example of the present disclosure.

Figure 6 illustrates an example of the control method.

## DETAILED DESCRIPTION

### Overview

Examples of the present disclosure relate to a power network arrangement. The power network arrangement includes a first power network coupled to a second power network (e.g., the main power grid) and a control system for controlling the first power network. The first power network includes a first sub-system and a second sub-system electrically coupled with the first sub-system through a power line. The first sub-system includes energy resources which comprise at least one renewable generation unit. The first sub-system and/or the second sub-system includes one or more devices configured for providing a grid service and the one or more devices comprise an electrolyzer unit. The control system includes one or more local controllers for controlling the energy resources and the one or more devices, and a network controller in communication with the one or more local controllers.

In examples of the present disclosure, the grid service includes various automatic control operations that the assets (e.g., the energy resources, grid service providing device, as well as interconnecting infrastructures) connected to the first power network provide, to guarantee the stability of the power system (e.g., a distribution or transmission system) to which they are connected. The grid service can be implemented through a controlled and modulated injection of active and reactive power, as a function of the status of the second power network; and this function has considered the grid codes, the size and nature of the assets, as well as the potential agreed amount in the corresponding market session (when applicable).

According to an example of the present disclosure, the hydrogen electrolyzer unit is used as a grid service providing device to be combined with a wind farm constituted by wind turbine generators, and the wind farm is coupled to the main power grid through either an AC or DC connection.

According to an example of the present disclosure, a desired regulation is obtained through the setting of local controller parameters from the network controller, corresponding to a state change in the second power network for providing grid regulation services, including grid-forming functionalities. For example, the network controller determines the modification of responses of assets in the first power network, as well as interconnecting infrastructures to which the assets are coupled, based on the desired regulation.

According to an example of the disclosure, different topological arrangements of the hydrogen electrolyzer unit with respect to the wind farm are applicable. According to various examples where the hydrogen electrolyzer unit is coupled to the wind farm, the regulation speed of the hydrogen electrolyzer unit, whose inherent regulation speed is slow, can be improved by combining with the wind farm, which can provide fast regulation, and such improvement can be observed by the main power grid.

### Example systems

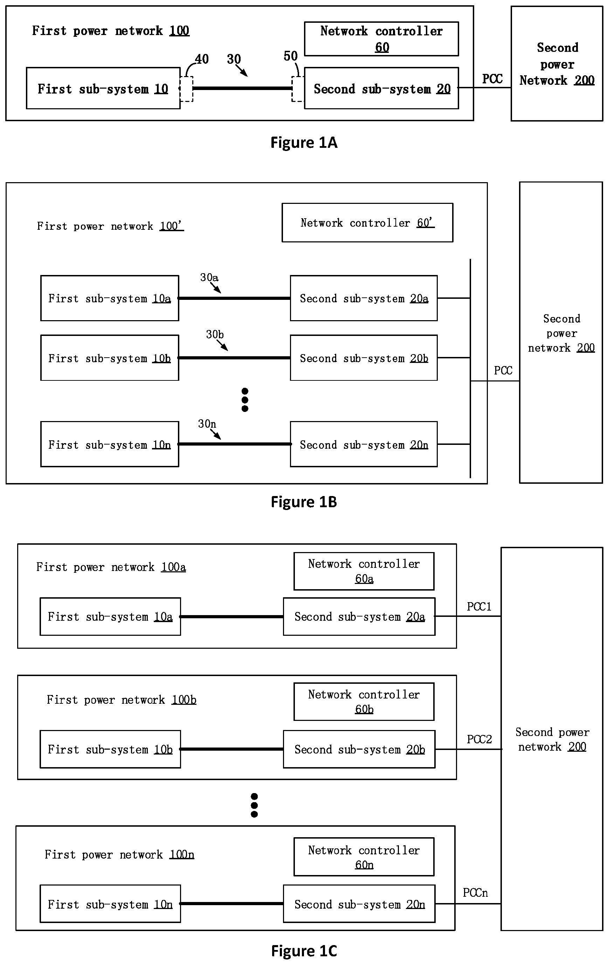

Figure 1A shows a power network arrangement according to an embodiment of the present disclosure. The power network arrangement includes a first power network and a control system for controlling operations of the first power network.

With reference to Figure 1A, the first power network 100 interfaces with (is coupled to) a second power network 200, which is external to the first power network 100. The second power network 200 can be a public power network and is coupled to the main power grid. The first power network 100 can be coupled with the second power network 200 at a PCC (Point of Common Coupling) or at different PCCs. The first power network 100 includes a first sub-system 10 and a second sub-system 20. The first sub-system 10 is electrically coupled to the second sub-system 20 through a power line 30. In an example, the first sub-system 10 is located offshore and the second sub-system is located onshore.

The power line 30 can include one or more transmission lines. For example, in a national power grid system, the power line 30 is used as a high-voltage transmission line to transport power over a long distance. The power line 30 spans valleys and rivers and serves as an important transmission corridor, ensuring reliable power supply to remote areas. In an example, the power line 30 includes one or more AC transmission lines (e.g., AC overhead lines or AC cables). In another example, the power line 30 includes one or more DC transmission lines (e.g., DC cables or HVDC transmission lines or MVDC transmission lines). In yet another example, the power line 30 includes one or more AC transmission lines and one or more DC transmission lines. The power line 30 can also include one or more distribution lines. For example, in the urban power grid system, power lines play the role of distribution lines, distributing power from substations to surrounding residential, commercial, and industrial areas.

In examples where the power line 30 includes a DC transmission line or a low frequency AC transmission line (e.g., HVDC or LF-HVAC transmission line), the DC transmission line or the low frequency AC transmission line is coupled with a converter station 40 (e.g., for AC-DC conversion), which is electrically connected to the first sub-system 10, and with another converter station 50 (e.g., for DC-AC conversion), which is electrically connected to the second sub-system 20. The low frequency AC can be about 16.7 Hz or 20 Hz. The AC sides of the converter stations may have the same or different nominal voltages. The AC sides of the converter stations may have the same or different nominal frequencies.

In examples where the power line 30 includes an AC transmission line 30, the AC transmission line is coupled with a transformer (not shown), which is electrically connected to the first sub-system 10, and with another transformer (not shown), which is electrically connected to the second sub-system 20. The AC can be about 50 Hz or 60 Hz.

The first sub-system 10 includes energy resources. The energy resources include one or more renewable generation units. The one or more renewable generation units include a wind farm with multiple wind turbine generators, and the wind farm can be an offshore wind farm. Additionally, the one or more energy resources may include one or more of photovoltaic (PV) systems, fuel cells and batteries. The first sub-system 10 can also incorporate one or more electrolyzer units (e.g., a hydrogen electrolyzer plant with multiple electrolyzer units) for providing grid services together with other grid service providing devices. Each electrolyzer unit includes an electrolyzer (e.g., the electrolyzer may include multiple electrolytic cells connected in series or parallel) and an adjustable power supply. The power supply can adjust the hydrogen production of the electrolyzer cell under the control of a local controller, thereby allowing the electrolyzer to consume a predetermined amount of power, thereby providing grid services together with other network service providing devices in the first network 100.

The second sub-system 20 is located in a node close to the second power network 200. The second sub-system 20 may include one or more network service providing devices, such as an electrolyzer unit or a STATCOM (Static Synchronous Compensator). According to examples of the present disclosure, the devices for providing grid services (i.e., grid service providing devices) can be in the first sub-system 10 and/or the second sub-system 20. In addition, in examples where the first sub-system 10 and the second sub-system 20 are connected by a DC transmission line or a low frequency AC transmission line, the DC transmission line or the low frequency AC transmission line is coupled to converter stations, which are also grid service providing devices.

According to examples of the present disclosure, the grid services provided by the grid service providing devices mainly include active-based services having a frequency-support functionality and a grid-forming inertial functionality. For example, the STATCOM may provide a grid service including the following functionalities: inertia, proportional frequency support, impedance emulation, voltage stabilization, reactive power provision, sub-synchronous oscillation damping, and harmonic compensation. The converter stations coupled with an HVDC transmission line may provide a grid service including the following functionalities: inertia support, impedance emulation, voltage stabilization, reactive power provision, sub-synchronous oscillation damping, and harmonic compensation

The control system includes one or more local controllers (not shown in Figure 1) for the energy resources and the grid service providing devices, and a network controller 60 in communication with the one or more local controllers. In an example, the network controller 60 is arranged in either the first sub-system 10 or the second sub-system 20 and manages the two sub-systems. In another example, the network controller 60 includes multiple modules, with one part of the modules in the first sub-system 10 to manage the first sub-system 10 and another part of the modules in the second sub-system 20 to manage the second sub-system 20. In yet another example, the network controller 60 includes a network controller which is in the first sub-system 10 to manage the first sub-system 10 and another network controller in the second sub-system 20 to manage the second sub-system 20. The network controller 60 is a system-level controller that coordinates with the local controllers to regulate a response of the first power network 100 (e.g., the total response contributed by the elements included in the first power network 100) so that it can match an expected amount of regulation services agreed upon with an operator of the second power network 200, whenever a state variation is experienced in the second power network 200. The network controller 60 also can be called (referred to as) a dynamic adjustment layer (DAL) in the control system.

In some other examples, the first power network 100 can also include sub-stations (not shown) coupled with the transmission line. Respective sub-stations can include transformers, circuit breakers and disconnectors, as well as measuring equipment such as instrument transformers, Intelligent electronic devices (IEDs), and phasor measurement units (PMUs), all of which are used for measuring electrical parameters, such as a voltage magnitude (e.g., instantaneous/RMS), a current magnitude (e.g., instantaneous/RMS), a phase difference (e.g., a voltage/current phase), power frequency, power factor, and harmonics. These parameters are required for power equipment protection, fault handling, power quality control, and for providing grid services. In an example, the measured parameters or calculated parameters (calculated based on the measured parameters) for providing the grid services are sent to the network controller 60.

Figure 1B shows an example of the power network arrangement illustrated in Figure 1A. The power network arrangement of Figure 1B includes a first power network 100' which includes a plurality of first sub-systems 10a~10n, a plurality of second sub-systems 20a~20n and a plurality of transmission lines 30a~30n. Each transmission line can be an AC transmission line or a DC transmission line. That is to say, the plurality of transmission lines can include AC transmission lines, DC transmission lines, or AC and DC transmission lines. Each first sub-system is electrically coupled to one of the plurality of second sub-systems through one of the plurality of transmission lines. For example, the first sub-system 10a is electrically coupled to the second sub-system 20a through the transmission line 30a; the first sub-system 10b is electrically coupled to the second sub-system 20b through the transmission line 30b, ... and the first sub-system 10n is electrically coupled to the second sub-system 20n through the transmission line 30n. The network controller 60' of the example of Figure 1B is similar to that of the network controller 60 described with reference to Figure 1A, except that this network controller 60' coordinates with local controls in the plurality of first sub-systems 10a~10n and the plurality of second sub-systems 20a~20n, which can be understood as a common system-level controller for these sub-systems. The plurality of second sub-systems 20a~20n are located in nodes close the second power network 200 and coupled to the second power network 200 at the same PCC.

Figure 1C shows another example of the power network arrangement illustrated in Figure 1A. The power network arrangement of Figure 1C includes a plurality of first power network 100a~100n. Each first power network includes a first sub-system and a second sub-system that is coupled to the first sub-system through a transmission line, which can be a DC transmission line or an AC transmission line. For example, in the first power network 100a, the first sub-system 10a is electrically coupled to the second sub-system 20a through a transmission line 30a; in the first power network 100b, the first sub-system 10b is electrically coupled to the second sub-system 20b through the transmission line 30b ... and in the first power network 100n, the first sub-system 10n is electrically coupled to the second sub-system 20n through the transmission line 30n. Each of the plurality of first power network 100a~100n includes a network controller dedicated to this first power network. For example, the first power network 100a includes a network controller 60a which coordinates with local controllers in the first power network 100a; the first power network 100b includes a network controller 60b which coordinates with local controllers in the first power network 100b ... and the first power network 100n includes a network controller 60n which coordinates with local controllers in the first power network 100n. The plurality of first power network 100a~100n are coupled to the second power network 200 at different PCCs (e.g., PCC1~PCCn). In this example, the plurality of first power network 100a~100n can be seen as distributed energy resources (DERs) to the second power network 200.

For clarity, the following describes examples of the power network arrangement illustrated in Figures 1A, 1B and 1C in a more detailed manner.

AC connection examples

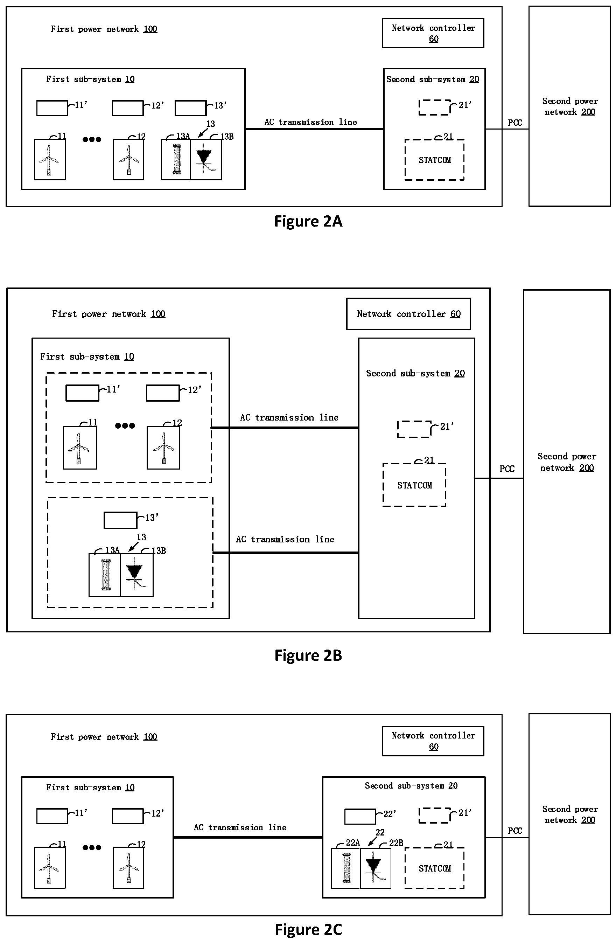

Figure 2A shows an AC connection example where the first sub-system 10 is coupled to the second sub-system 20 through an AC transmission line. In this example, assets in the first sub-system 10 are coupled to the second sub-system 20 through a common AC transmission line, and the first power network 100 interfaces with the second power network 200 at a PCC (Point of Common Coupling).

With reference to Figure 2A, the first sub-system 10 includes a wind farm which comprises multiple wind turbine generators 11 and 12. Each wind turbine generator is configured with a local controller, for example, the wind turbine generator 11 is configured with a local controller 11' and the wind turbine generator 12 is configured with a local controller 12'. The first sub-system 10 further includes an electrolyzer unit 13 which is used as a grid service providing device. The electrolyzer unit 13 comprises an electrolyzer 13A and an adjustable power supply 13B to supply electricity to the electrolyzer 13A. The electrolyzer unit 13 is configured with a local controller 13' to control the power supply 13B to adjust the current and/or voltage supplied to the electrolyzer 13A. In an example, the wind farm generates electricity to supply the electrolyzer unit 13 for hydrogen production. When the wind farm generates enough electricity to meet the power demand of the electrolyzer unit 13 and there is excess power, for example, during a windy season, the excess power can be transmitted to the second power network 200 through the AC transmission line. The second sub-system 20 can include a STATCOM 21 which is used as another grid service providing device and is configured with a local controller 21'. The STATCOM 21 and the electrolyzer 13, along with the assets in the first power network 100, can provide a regulation service when a change in state (e.g., a frequency event) occurs in the second power network 200.

In an example, the first sub-system 10 is located offshore and the second sub-system 20 is located onshore. In this example, the wind farm is an offshore wind farm.

Figure 2B shows another AC connection example where the first sub-system 10 is coupled to the second power network 200 through multiple AC transmission lines. In this example, assets in the first sub-system 10 are coupled to the second sub-system 20 through different AC transmission lines, and the first power network 100 interfaces with the second power network 200 at a PCC.

With reference to Figure 2B, the implementations of the first sub-system 10 and the second sub-system 20 in Figure 2B is similar to those in Figure 2A, except that the wind farm and electrolyzer unit in the first sub-system 10 are coupled to the second sub-system 20 through different AC transmission lines.

Figure 2C shows yet another AC connection example where the first sub-system 10 is coupled to the second power network 200 through an AC transmission line. In this example, assets in the first sub-system 10 are coupled to the second sub-system 20 through a common AC transmission line, and the first power network 100 interfaces with the second power network 200 at a PCC.

With reference to Figure 2C, the implementations of the first sub-system 10 and the second sub-system 20 in Figure 2C is similar to those in Figure 2A, except that the electrolyzer unit 22, whose implementation is similar to the electrolyzer unit 13 in Figure 2A, is arranged in the second sub-system 20 instead of in the first sub-system 10.

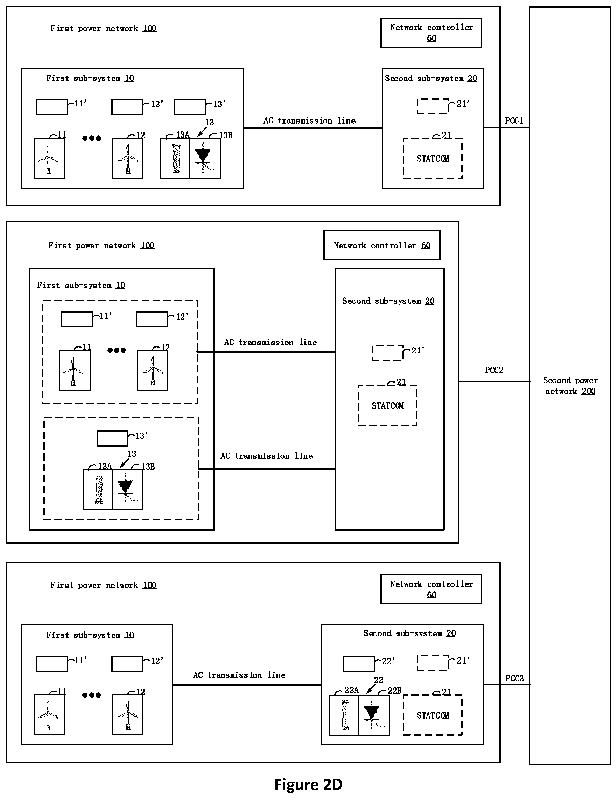

Figure 2D shows yet another AC connection example where multiple first power networks are connected to the second power network 200 at different PCCs, and in each first power network, the first sub-system 10 is coupled to the second sub-system 20 through one or more AC transmission lines.

With reference to Figure 2D, in an example, the multiple first power networks can include the first power network described with reference to Figure 2A, which is connected to the second power network 200 at the PCC1; the first power network described with reference to Figure 2B, which is connected to the second power network 200 at the PCC2; and the first power network described with reference to Figure 2C, which is connected to the second power network 200 at the PCC3.

DC connection examples

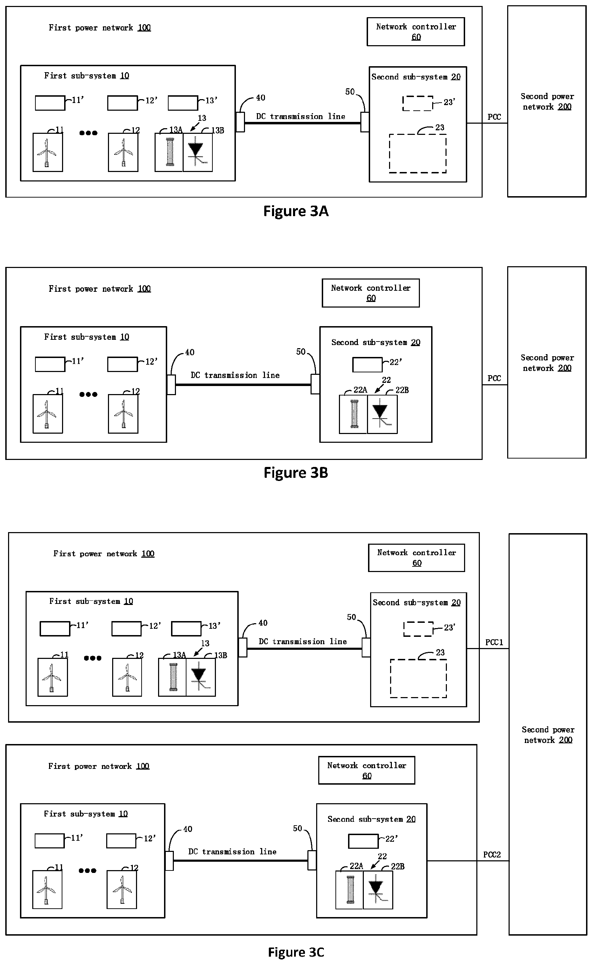

Figure 3A shows a DC connection example where the first sub-system 10 is coupled to the second sub-system 20 through a DC transmission line (e.g., an HVDC transmission line). In this example, assets in the first sub-system 10 are coupled to the second sub-system 20 through a common DC transmission line, and the first power network 100 interfaces with the second power network 200 at a PCC (Point of Common Coupling).

With reference to Figure 3A, the first sub-system 10 includes a wind farm which comprises multiple wind turbine generators 11 and 12. Each wind turbine generator is configured with a local controller, for example, the wind turbine generator 11 is configured with a local controller 11' and the wind turbine generator 12 is configured with a local controller 12'. The first sub-system 10 further includes an electrolyzer unit 13 which is used as a grid service providing device. The electrolyzer unit 13 comprises an electrolyzer 13A and an adjustable power supply 13B to supply electricity to the electrolyzer 13A. The electrolyzer unit 13 is configured with a local controller 13' to control the power supply 13B to adjust the current and/or voltage supplied to the electrolyzer 13A. In an example, the wind farm generates electricity to supply the electrolyzer unit 13 for hydrogen production. When the wind farm generates enough electricity to meet the power demand of the electrolyzer unit 13 and there is excess power, for example, during a windy season, the excess power can be transmitted to the second power network 200 through the DC transmission line. The second sub-system 20 can include one or more assets and each asset is configured with a local controller. For example, the second sub-system 20 includes a fuel cell unit 23 configured with a local controller 23'. The DC transmission line is coupled to a converter station 40, which is connected with the first sub-system 10, and to another converter station 50, which is connected with the second sub-system 20. Each of the converter stations 40 and 50 is used as a grid service providing device. The electrolyzer 13 and at least one converter station, along with the assets in the first power network 100, can provide a regulation service when a change in state (e.g., a frequency event) occurs in the second power network 200.

In an example, the first sub-system 10 is located offshore and the second sub-system 20 is located onshore. In this example, the wind farm is an offshore wind farm.

Figure 3B shows another DC connection example where the first sub-system 10 is coupled to the second power network 200 through an DC transmission line. In this example, assets in the first sub-system 10 are coupled to the second sub-system 20 through a common DC transmission line, and the first power network 100 interfaces with the second power network 200 at a PCC.

With reference to Figure 3B, the implementations of the first sub-system 10 and the second sub-system 20 in Figure 3B is similar to those in Figure 3A, except that the electrolyzer unit 22, whose implementation is similar to the electrolyzer unit 13 in Figure 3A, is arranged in the second sub-system 20 instead of in the first sub-system 10.

Figure 3C shows yet another DC connection example where multiple first power networks are connected to the second power network 200 at different PCCs, and in each first power network, the first sub-system 10 is coupled to the second sub-system 20 through one or more DC transmission lines.

With reference to Figure 3C, in an example, the multiple first power networks can include the first power network described with reference to Figure 3A, which is connected to the second power network 200 at the PCC1; and the first power network described with reference to Figure 3B, which is connected to the second power network 200 at the PCC2.

AC/DC hybrid connection examples

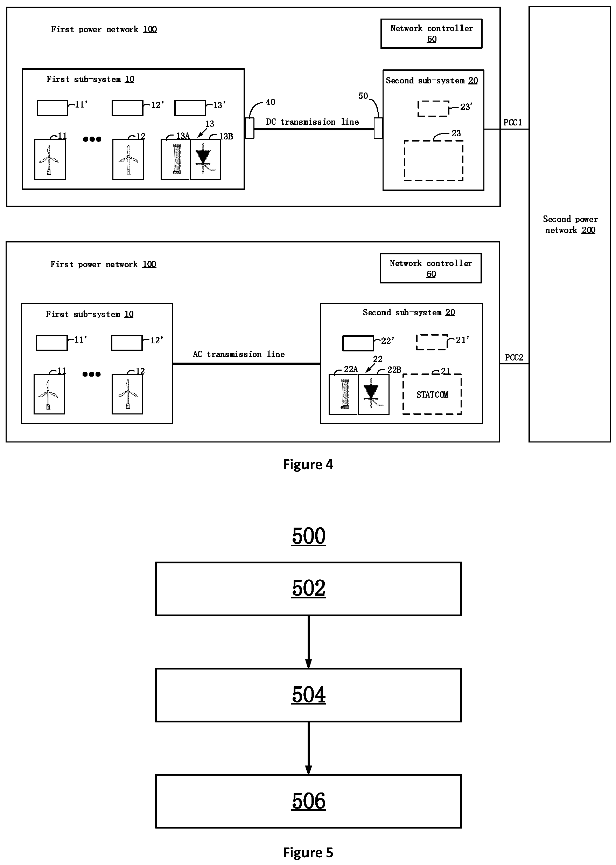

Figure 4 shows an example of an AC/DC hybrid connection, where multiple first power networks are connected to the second power network 200 at different PCCs. In some of these first power networks, the first sub-system 10 is coupled to the second sub-system 20 through one or more AC transmission lines, while in other first power networks, the first sub-system 10 is coupled to the second sub-system 20 through one or more DC transmission lines.

With reference to Figure 4, in an example, the multiple first power networks can include the first power network described with reference to Figure 3A, which is connected to the second power network 200 at the PCC1; and the first power network described with reference to Figure 2B, which is connected to the second power network 200 at the PCC2.

**Example methods**

Figure 5 is a flowchart showing a control method 500 for controlling the first power network described above. The method 500 can be performed by the network controller described above.

With reference to Figure 5, at block 502, the network controller receives information on a change in the network state of the second power network 200. The network state of the second power network can be understood as the state of the second power network observed at the coupling point between the first power network and the second power network. This network state can be indicated by a network state parameter. The network state parameter can include one or more parameters, which can be measured or calculated based on measurement results. The network state parameter includes, for example, one or more of the network frequency, voltage (magnitude/phase) and current (magnitude/phase) measured at the coupling point between the first power network and the second power network, and any derived parameters (e.g., droop response, inertial response, voltage/current regulation) from the network state parameter. This measurement can be implemented through hardware measurement devices or software algorithms (e.g., phase-locked-loop algorithms).

At block 504, the network controller determines a reference response of the first power network based on the change in the network state of the second power network. The reference response of the first power network can be understood as follows: after the state of the second power network has changed, if the first power network makes a reference response corresponding to the change, it can affect the state of the second power network, so that the state of the second power network returns to a predetermined state. The predetermined state can be a customized state for the second power network. For example, some networks may require maximization of the inertia, while others may require improved damping (e.g., through monotonic response).

In an example, the reference response is a reference active power injection of the first power network, which is determined based on the measured change in the state of the second network and the agreed range of regulation for the power injection with the operator of the second power network.

In an example, the reference response of the first power network includes one or more of: 1) a droop response of the first power network to a frequency event that occurs in the second power network; 2) an inertial response of the first power network to a frequency event that occurs in the second power network; and 3) a weighted combination of the droop response and the inertial response.

The droop response includes a reactive power-voltage droop response (i.e., Q-U Droop Response). For example, when the reactive power in the second power network changes, according to an embodiment of the present disclosure, the reactive output of wind turbine generators or other reactive sources in the first power network is adjusted to maintain the voltage stability of the second power network, that is, either maintaining the voltage at the coupling point of the first and second power networks or keeping the change of this voltage within an acceptable range. The droop response also includes an active power-frequency droop response (i.e., P-f Droop Response). For example, when the active power in the second power network changes, according to an embodiment of the present disclosure, the output of wind turbine generators in the first power network is adjusted to maintain the network frequency stability of the second power network, that is, either maintaining the frequency at the coupling point of the first and second power networks or keeping the change of this frequency within an acceptable range. Therefore, by implementing such droop responses, it is helpful to maintain the stability of voltage and frequency when the second power network (e.g., the main grid) faces power changes.

The inertial response may include the ability of wind turbine generators (i.e., rotating equipment) in the first power network to quickly respond to frequency changes in the second power network using their rotational inertia. According to an embodiment of the present disclosure, wind turbine generators in the first power network use their inertia to quickly release kinetic energy, by slowing down their rotation, to cope with frequency drop events in the second power network. For example, when the frequency of the second power network drops, wind turbine generators in the first power network continue to operate at a speed higher than the current frequency of the second power network, thereby immediately releasing additional kinetic energy into the second power network, which helps to increase the frequency of the second power network.

In some embodiments, the first power network can use a weighted combination of the afore-mentioned droop response and inertia response to respond to a frequency event in the second power network. The weighting coefficient of the combination can be adjusted according to various frequency events, so as to achieve fast frequency recovery effects for different frequency events.

In an example, the network controller uses a model to determine the reference response of the first power network. The input of the model includes the measured change in the state of the second power network, and the model output includes the reference response of the first power network. The model is, for example, a trained machine learning model and is pre-stored in the network controller. The model can be trained using multiple sets of training data containing measured changes in the state of the second power network and corresponding reference response of the first power network, thus enabling it to predict a corresponding reference response of the first power network when inputting a new state change of the second power network.

At block 506, the network controller determines a control parameter for one or more local controllers to regulate the response of the first power network with respect to the determined reference response, which can be agreed with the operator of the second power network. That is to say, once the state of the second power network changes (e.g., a frequency event occurs), the local controllers can respond in a way that the first power network's response will be as close as possible to the reference response. This is achieved as a result of the aforementioned regulation process.

In an example, the control parameter includes a set point and an adjustable coefficient. The set point is, for example, the target value of the regulation, such as a target frequency. The adjustable coefficient is, for example, dynamic adjustment coefficient during the regulation process of the response of the first power network. The dynamic adjustment coefficient can include a first coefficient for adjusting the response speed of the first power network (e.g., a derivative term) and a second coefficient for adjusting the stability of the first power network (e.g., a proportional drop term). The larger the first coefficient, the faster the response speed of the first power network, that is, the regulation of the first power network can approach the target value of the regulation faster, but too fast a response speed can cause instability in the first power network. The larger the second coefficient, the better the stability of the response of the first power network, but too much pursuit of stability can lead to a very slow response speed in the first power network. According to an embodiment of the present disclosure, the first coefficient and the second coefficient each have a predetermined adjustment range, so that the regulation of the response of the first power network will not cause instability in the first power network due to too fast a response speed, nor will there be a situation where the regulation is too slow.

It is noted that the adjustment range of each coefficient is predetermined based on measurement results and model calculations of the response of the first power network and can be adjusted based on specific application scenarios.

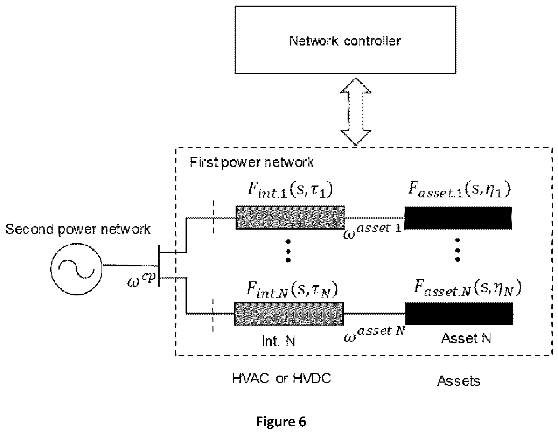

An embodiment of the control method 500 is described below with reference to FIG. 6. In this embodiment, the first power network includes assets and interconnecting infrastructures. The assets include generators (at least a wind farm and other renewable generation units) and loads (at least one hydrogen electrolyzer unit). The interconnecting infrastructures include HVAC transmission lines, HVDC transmission lines, and converter stations coupled to the HVDC transmission lines. In this embodiment, a frequency event is used to represent the afore-mentioned change in state of the second power network.

With reference to Figure 6, the reference response of the first power network is expressed by the following formula (1):

$$F_{ref}^1(s) = -\frac{\Delta P_{ref}^1}{\Delta \omega^{cp}} \qquad (1)$$

where:

$s$ indicates the Laplace domain operator;

$F_{ref}^1(s)$ indicates the reference response of the first power network;

$\Delta\omega^{cp}$ indicates a transient in the frequency measured at the point of coupling (i.e., the point at which the first power network is coupled to the second power network);

$\Delta P_{ref}^1$ indicates the idea variation (with respect to its pre-event operating conditions) of the power injected/absorbed by the first power network after the frequency event.

According to examples of the present disclosure, the expression of the reference response can be extended or adjusted according to different regulation services, and consequently, various response requirements can be met.

In an example where a droop response (which is expressed by a proportional term), an inertial response (which is expressed by a derivative term) and an inherent response delay caused by the limited passband of the physical actuator are involved, the reference response can be expressed as follows:

$$F_{ref}^1(s) = \frac{K_{p1} + sK_{i1}}{(1 + s\tau_1)^2}$$

where $K_{p1}$ is the proportional term associated with the droop response, $K_{i1}$ is the derivative term associated with the inertia response, and $\tau_1$ is the time constant associated with system response time. The square term in the denominator reflects the second-order response due to system dynamics such as inertia and possible delays such as physical actuator constraints.

In an example where multiple regulation services, such as inertia, symmetric or asymmetric proportional droop regulation, automatic or manual secondary regulation, are included, the reference response can be expressed as follows:

$$F_{ref}^1(s) = \frac{\sum_{n=0}^{N} K_n s^n}{\sum_{m=0}^{M} \tau_m s^m}$$

where, $K_n$ and $\tau_m$ are coefficients and time constants related to different regulation services, and N and M are the maximum indexes of these coefficients and time constants. This function form is a rational function, where both the numerator and denominator are polynomials, allowing for flexible representation of the combined effects of different regulation services.

The response of the assets to the frequency event, for example, is the amount of power injected or absorbed by the assets once the frequency event is experienced at their terminals, and this response can be expressed by the following formula (2):

$$F_{asset,\ n}(s,\ \eta_n) = -\frac{\Delta P_{asset,n}}{\Delta \omega_{asset,n}} \qquad (2)$$

where:

$n$ indicates the index of the assets (e.g., the nth asset), $n \in [1, N]$, and $N$ is the total number of assets in the first power network;
$F_{asset,\ n}(s, \eta_n)$ indicates the response of the nth asset;
$\Delta\omega_{asset,n}$ indicates a transient in the frequency of the nth asset;
$\Delta P_{asset,n}$ indicates the variation (with respect to its pre-event operating conditions) of the power injected/absorbed by the nth asset after the frequency event;
$\eta_n$ indicates an adjustable coefficient (e.g., the afore-mentioned adjustable coefficient) which can be adjusted to regulate the response of the nth asset.

According to examples of the present disclosure, the dynamic response of assets can be adjusted by controlling a lead-lag (feedforward-feedback) transfer function in the control strategy, such as the inertia regulation provided by wind turbine generators and the droop regulation provided by electrolyzers, to match the reference response, thereby improving the regulation capability and performance of the entire system.

The response of a wind turbine generator can be expressed as follows:

$$F_{asset,1}(s, \eta_1) = \frac{K_{asset\ 1} s}{1 + s \tau_{asset\ 1}}$$

where $\tau_{asset\ 1}$ represents the natural delay of the wind turbine generator, which is a non-adjustable parameter, while $K_{asset\ 1}$ represents a gain associated with the dynamic characteristics of the wind turbine generator, which is an adjustable parameter. This expression reflects the dynamic characteristics of the wind turbine generator when providing inertial services. A transfer function is introduced into this expression, which is expressed as follows:

$$F_{asset,1}(s, \eta_1) = \frac{K_{asset\ 1} s}{1 + s \tau_{asset\ 1}} \cdot \frac{(s + z_{asset\ 1})}{(s + p_{asset\ 1})}$$

where $\cdot \frac{(s + z_{asset\ 1})}{(s + p_{asset\ 1})}$ is the transfer function, and $z_{asset\ 1}$ and $p_{asset\ 1}$ are parameters that can be adjusted through control to match the response of the wind turbine generator to the reference response.

The response of an electrolyzer can be expressed as follows:

$$F_{asset,2}(s, \eta_1) = \frac{K_{asset\ 2}}{1 + s \tau_{asset\ 2}}$$

where $\tau_{asset\ 2}$ represents the natural delay of the electrolyzer, which is a non-adjustable parameter, while $K_{asset\ 2}$ represents a gain associated with the dynamic characteristics of the electrolyzer, which is an adjustable parameter. This expression reflects the static and dynamic characteristics of the electrolyzer when providing droop regulation services. A transfer function is introduced into this expression, which is expressed as follows:

$$F_{asset,2}(s,\eta_1) = \frac{K_{asset\ 2}}{1 + s\tau_{asset\ 2}} \cdot \frac{(s + z_{asset\ 2})}{(s + p_{asset\ 2})}$$

where $\frac{(s+z_{asset\ 2})}{(s+p_{asset\ 2})}$ is the transfer function, and $z_{asset\ 2}$ and $p_{asset2}$ are parameters that can be adjusted through control to match the response of the electrolyzer to the reference response.

In this way, by adjusting the adjustable parameters of each asset, the sum of their responses can be matched to the reference response.

The effect of the interconnecting infrastructures on the response of the assets which are coupled to the first power network through the interconnecting infrastructures can be expressed by the following formula (3):

$$F_{int,n}(s) = \frac{\Delta\omega_{asset,n}}{\Delta\omega^1} \qquad (3)$$

where:

$F_{int.,n}(s)$ indicates the effect of the nth interconnecting infrastructure (e.g., the nth transmission line) on the response of the nth assets which is coupled to the first power network through the nth interconnecting infrastructure;

$\Delta\omega_{asset,n}$ indicates a transient in the frequency of the nth asset;

$\Delta\omega^{cp}$ indicates a transient in the frequency measured at the point of coupling at which the first power network is coupled to the second power network.

It is seen that the effect of the interconnecting infrastructures on the response of the assets is realized through a ratio of the frequency measured at the terminals of the assets to that measured at the point of coupling.

In the case where the nth asset is couple to the first power network through an HVAC transmission line, the ratio will be equal to one, that is, $\Delta\omega_{asset,n} = \Delta\omega^{cp}$ , and $F_{int,HVAC}(s) = 1$.

In the case where the nth asset is coupled to the first power network through an HVDC transmission line, the converter stations can be controlled to modify the frequency profiles at two terminals of the HVDC transmission line. Thus, the ratio will not be equal to one, that is, $\Delta\omega_{asset,n} \neq \Delta\omega^{cp}$ , and $F_{int,HVDC}^{(s)} \neq 1$. In this case, the effect of the nth interconnecting infrastructure can be represented by a time delay, as shown in the following formula (4):

$$F_{int,\ HVDC}(s) = \exp(-s\tau_n) \qquad (4)$$

where $\tau_n$ indicates an adjustable coefficient (e.g., the afore-mentioned adjustable coefficient) which can be adjusted to regulate the effect of the nth transmission line to the response of the nth asset.

The network controller regulates the parameters $\tau_1, \tau_N, \eta_1, \eta_N$ such that the combined response of $F_{int.1}, F_{int.N}$, $F_{asset.1}, F_{asset.N}$ matches the reference response of the first power network as much as possible. In an example, the regulation is expressed by the following formula (5)

$$\min_{\tau_1,...,\tau_N \text{ and } \eta_1,...\ \eta_N} \left\| \sum_{n=1}^{N} F_{int,n}(s, \tau_n^*)\ F_{asset,n}(s, \eta_n^*) - F_{ref}^1(s) \right\| \qquad (5)$$

where the symbol * indicates that the parameters have been modified by the network controller such that the difference $\left\| F^1(s) - F_{ref}^1(s) \right\|$ is minimized as a function of $\tau_1, ..., \tau_N$ and $\eta_1, ... \eta_N$.

According to examples of the present disclosure, the regulation can be done either recursively, or on demand, or on a predetermined periodic basis.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein. All structural and functional equivalent transformations to the elements of the various aspects of the present disclosure, which are known or to be apparent to those skilled in the art, are intended to be covered by the claims.

**Claims**

1.  A power network arrangement comprising:

    a first power network comprising a first sub-system and a second sub-system electrically coupled with the first sub-system through a power line, the first sub-system comprising energy resources which comprise at least one renewable generation unit, the first sub-system and/or the second sub-system comprising one or more devices configured for providing a grid service, wherein the one or more devices comprise an electrolyzer unit; and
    a control system comprising one or more local controllers for the energy resources and the one or more devices, and a network controller communicatively coupled with the one or more local controllers,
    wherein the network controller is configured to coordinate with at least one local controller of the one or more local controllers to regulate at least one energy resource and/or at least one device of the one or more devices in response to a change in a network state of a second power network coupled with the first power network.

2.  The power network arrangement of claim 1, wherein the at least one renewable generation unit in the first network comprises a wind farm or wherein the at least one renewable generation unit comprises a solar power unit and/or a fuel cell unit.

3.  The power network arrangement of claim 1, wherein the electrolyzer unit comprises an electrolyzer that is configured with a power supply to supply power to the electrolyzer, and
    the network controller is configured to control one of the one or more local controllers to control the power supplied to the electrolyzer such that amount of electricity consumed by the electrolyzer is controlled for providing the grid service.

4.  The power network arrangement of claim 1, wherein the one or more devices further comprise one or more of:

    a static synchronous compensator (STATCOM), and
    a converter station coupled with the power line.

5.  The power network arrangement of claim 1, wherein the power line comprises one or more DC transmission lines, and each DC transmission line is coupled with converter stations.

6.  The power network arrangement of claim 1, wherein the power line comprises:

    one or more AC transmission lines; or
    one or more AC transmission lines and one or more DC transmission lines.

7.  The power network arrangement of claim 1, wherein the power line comprises a plurality of transmission lines coupled at the same point of common coupling (PCC) for connection with the second power network,
    or
    wherein the power line comprises a plurality of transmission lines coupled at different PCCs for connection with the second power network.

8.  The power network arrangement of claim 1, wherein the first sub-system comprises a wind farm and at least one electrolyzer unit, and wherein the wind farm and the at least one electrolyzer unit are coupled to the second sub-system through a common AC transmission line, or

    wherein the first sub-system comprises a wind farm and at least one electrolyzer unit, and wherein the wind farm and the at least one electrolyzer unit are coupled to the second sub-system through different AC transmission lines, or
    wherein the first sub-system comprises a wind farm and the second sub-system comprises at least one electrolyzer unit, wherein the wind farm is coupled to the second sub-system through an AC transmission line, and wherein the second sub-system is coupled with the second power network at a point of common coupling (PCC), or
    wherein the first sub-system comprises a wind farm and at least one electrolyzer unit, and wherein the wind farm and the at least one electrolyzer unit are coupled to the second sub-system through a common HVDC transmission line, which is coupled with converter stations, or
    wherein the first sub-system comprises a wind farm and the second sub-system comprises at least one electrolyzer unit, wherein the wind farm is coupled to the second sub-system through an HVDC transmission line, which is coupled with converter stations, and wherein the second sub-system is coupled with the second power network at a point of common coupling (PCC), or

wherein the first sub-system comprises a wind farm and at least one electrolyzer unit, and the wind farm and the at least one electrolyzer unit are coupled to the second sub-system through at least one AC transmission line and at least one DC transmission line.

9. The power network arrangement of claim 1, wherein the network controller is included in the first sub-system or the second sub-system.

10. The power network arrangement of claim 1, wherein the change in the network state of the second power network comprises the change in one or more of the following parameters:

- a voltage measured at the coupling point of the first and second networks; and
- a power frequency measured at the coupling point of the first and second networks.

11. The power network arrangement of claim 1, wherein the network controller is configured to coordinate with the at least one local controller to regulate a response of the first network with respect to a reference response, which corresponds to a regulation service when the change in the state occurs in the second power network.

12. A method for controlling a power network arrangement of any of claims 1-11, the method comprising:

receiving information on a change in the network state of the second power network, wherein the information on the change comprises a network frequency and/or voltage measured at the coupling point of the first and second power networks;

determining a reference response of the first power network based on the change in the network state of the second power network; and

determining a control parameter of the at least one local controller based on the determined reference response, for regulating a response of the first power network with respect to the reference response.

13. The method of claim 12, wherein the reference response comprises one or more of:

- a droop response of the first power network to the state change in the second power network;
- an inertial response of the first power network to the state change in the second power network;
- a weighted combination of the droop response and the inertial response.

14. The method of the claim 12, wherein the control parameter comprises a set point and an adjustable coefficient;

the set point comprises a target value of the regulation; and
the adjustable coefficient comprises a first coefficient for adjusting the response speed of the first power network and a second coefficient for adjusting the stability of the first power network.

15. A second power network coupled with a power network arrangement of any of claims 1-11, wherein the second power network is configured to adapt according to the regulation performed in the first power network, when a state change occurs in the second power network.

First power network 100

Network controller 60

First sub-system 10 ··· 40 ··· 30 ··· 50 ··· Second sub-system 20 ··· PCC ··· Second power Network 200

**Figure 1A**

First power network 100'

Network controller 60'

First sub-system 10a ——— 30a ——— Second sub-system 20a

First sub-system 10b ——— 30b ——— Second sub-system 20b

First sub-system 10n ——— 30n ——— Second sub-system 20n

PCC

Second power network 200

**Figure 1B**

First power network 100a

Network controller 60a

First sub-system 10a ——— Second sub-system 20a ——— PCC1

First power network 100b

Network controller 60b

First sub-system 10b ——— Second sub-system 20b ——— PCC2

Second power network 200

First power network 100n

Network controller 60n

First sub-system 10n ——— Second sub-system 20n ——— PCCn

**Figure 1C**

First power network 100

Network controller
60

First sub-system 10

11'    12'    13'

11    ●●●    12    13A    13B
13

AC transmission line

Second sub-system 20

21'

21

STATCOM

PCC

Second power
network 200

**Figure 2A**

First power network 100

Network controller 60

First sub-system 10

11'    12'

11    ●●●    12

AC transmission line

Second sub-system 20

21'

21

STATCOM

13'

13A    13B
13

AC transmission line

PCC

Second power
network 200

**Figure 2B**

First power network 100

Network controller
60

First sub-system 10

11'    12'

11    ●●●    12

AC transmission line

Second sub-system 20

22'    21'

22A    22B    21
22

STATCOM

PCC

Second power
network 200

**Figure 2C**

First power network 100

Network controller 60

First sub-system 10

11'    12'    13'

11 ••• 12    13A  13  13B

AC transmission line

Second sub-system 20

21'

21
STATCOM

PCC1

First power network 100

Network controller 60

First sub-system 10

11'    12'

11 ••• 12

AC transmission line

13'

13A  13  13B

AC transmission line

Second sub-system 20

21'

21
STATCOM

PCC2

Second power network 200

First power network 100

Network controller 60

First sub-system 10

11'    12'

11 ••• 12

AC transmission line

Second sub-system 20

22'    21'

22A  22  22B    21
STATCOM

PCC3

**Figure 2D**

First power network 100

First sub-system 10

11'    12'    13'

11   •••   12   13A  13B

13

40

DC transmission line

Network controller 60

50

Second sub-system 20

23'

23

PCC

Second power network 200

**Figure 3A**

First power network 100

First sub-system 10

11'    12'

11   •••   12

40

DC transmission line

Network controller 60

50

Second sub-system 20

22'

22

22A  22B

PCC

Second power network 200

**Figure 3B**

First power network 100

First sub-system 10

11'    12'    13'

11   •••   12   13A  13B

13

40

DC transmission line

Network controller 60

50

Second sub-system 20

23'

23

PCC1

First power network 100

First sub-system 10

11'    12'

11   •••   12

40

DC transmission line

Network controller 60

50

Second sub-system 20

22'

22

22A  22B

PCC2

Second power network 200

**Figure 3C**

First power network **100**

Network controller **60**

First sub-system **10**

11'    12'    13'

11    12    13A    13B

13

40

DC transmission line

50

Second sub-system **20**

23'

23

PCC1

Second power network **200**

First power network **100**

Network controller **60**

First sub-system **10**

11'    12'

11    12

AC transmission line

Second sub-system **20**

22'    21'

22A    22    22B    21

STATCOM

PCC2

**Figure 4**

**500**

**502**

**504**

**506**

**Figure 5**

**Figure 6**

Europäisches
Patentamt

European
Patent Office

Office européen
des brevets

# EUROPEAN SEARCH REPORT

**Application Number**

EP 24 18 9971

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/208353 A1 (HANSEN LUKAS [US] ET AL) 29 June 2023 (2023-06-29) * the whole document * ----- | 1-15 | INV. H02J3/38 H02J3/46 |
| A | US 2022/052524 A1 (AKYOL BORA [US] ET AL) 17 February 2022 (2022-02-17) * the whole document * ----- | 1-15 | |
| A | US 2021/363651 A1 (SEYMOUR ERIC [US] ET AL) 25 November 2021 (2021-11-25) * the whole document * ----- | 1-15 | |
| A | EP 4 243 233 A1 (SIEMENS GAMESA RENEWABLE ENERGY AS [DK]) 13 September 2023 (2023-09-13) * the whole document * ----- | 1-15 | |

| | |
|---|---|
| | TECHNICAL FIELDS SEARCHED (IPC) |
| | H02J |

The present search report has been drawn up for all claims

| Place of search | Date of completion of the search | Examiner |
|---|---|---|
| Munich | 31 January 2025 | Hunckler, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 9971

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | Publication date | Patent family member(s) | Publication date |
|---|---|---|---|
| US 2023208353 A1 | 29-06-2023 | CA 3128943 A1 | 13-08-2020 |
| | | CN 113646984 A | 12-11-2021 |
| | | EP 3921914 A1 | 15-12-2021 |
| | | GB 2596240 A | 22-12-2021 |
| | | JP 2022519736 A | 24-03-2022 |
| | | KR 20210125040 A | 15-10-2021 |
| | | PE 20211837 A1 | 15-09-2021 |
| | | SA 521422722 B1 | 06-12-2023 |
| | | US 2020259358 A1 | 13-08-2020 |
| | | US 2021226466 A1 | 22-07-2021 |
| | | US 2023208353 A1 | 29-06-2023 |
| | | US 2023231516 A1 | 20-07-2023 |
| | | WO 2020163749 A1 | 13-08-2020 |
| US 2022052524 A1 | 17-02-2022 | AR 122001 A1 | 03-08-2022 |
| | | AR 122002 A1 | 03-08-2022 |
| | | AU 2020389481 A1 | 18-11-2021 |
| | | EP 3931660 A1 | 05-01-2022 |
| | | TW 202147735 A | 16-12-2021 |
| | | TW 202203541 A | 16-01-2022 |
| | | TW 202207570 A | 16-02-2022 |
| | | TW 202236785 A | 16-09-2022 |
| | | US 11031781 B1 | 08-06-2021 |
| | | US 11043809 B1 | 22-06-2021 |
| | | US 11081887 B1 | 03-08-2021 |
| | | US 2022052523 A1 | 17-02-2022 |
| | | US 2022052524 A1 | 17-02-2022 |
| | | US 2022052525 A1 | 17-02-2022 |
| | | US 2023178985 A1 | 08-06-2023 |
| | | WO 2021225632 A1 | 11-11-2021 |
| | | WO 2021225633 A1 | 11-11-2021 |
| | | WO 2021225634 A1 | 11-11-2021 |
| US 2021363651 A1 | 25-11-2021 | EP 3811484 A1 | 28-04-2021 |
| | | US 2021363651 A1 | 25-11-2021 |
| | | WO 2019246433 A1 | 26-12-2019 |
| EP 4243233 A1 | 13-09-2023 | CN 118872177 A | 29-10-2024 |
| | | EP 4243233 A1 | 13-09-2023 |
| | | EP 4460881 A1 | 13-11-2024 |
| | | WO 2023169730 A1 | 14-09-2023 |

EPO FORM P0459

For more details about this annex : see Official Journal of the European Patent Office, No. 12/82